# EUROPEAN PATENT SPECIFICATION

(11) **EP 2 982 581 B1**
(45) Date of publication and mention of the grant of the patent: **14.10.2020**
(21) Application number: 15743917.5
(22) Date of filing: 30.01.2015
(51) Int. Cl.: B62K 5/05, B62H 1/04, B62K 5/08, B62K 5/10, B62K 5/027

(54) **VEHICLE**
FAHRZEUG
VÉHICULE

(30) Priority: 31.01.2014 JP 2014017264
(43) Date of publication of application: 10.02.2016
(73) Proprietor: Yamaha Hatsudoki Kabushiki Kaisha, Iwata-shi, Shizuoka 438-8501 (JP)
(72) Inventor: TAKANO, Kazuhisa, Iwata-shi, Shizuoka 438-8501 (JP); TOMIMATSU, Masahiro, Iwata-shi, Shizuoka 438-8501 (JP)
(74) Representative: Grünecker Patent- und Rechtsanwälte PartG mbB
(86) International application number: PCT/JP2015/000411
(87) International publication number: WO 2015/115108

(56) References cited:
- CN-Y- 2 383 745
- FR-A1- 2 709 463
- JP-A- 2009 202 719
- JP-A- 2011 126 514
- US-A- 4 671 374
- US-A- 4 697 663
- US-S1- D 547 242

## Description

The present invention relates to a vehicle including a body frame, a front wheel portion, and a rear wheel that tilt in a left-right direction of the vehicle during left and right turns.

Prior art document US 4,697,663 discloses a vehicle according to the preamble of claim 1 with three wheels that includes a single rear driven wheel and two front steerable wheels. The front wheels are supported by cross members in a parallelogram mechanism carried by the frame of the vehicle. A platform is connected to the frame and extends rearwardly of the cross members on both sides of the lower cross member. A U-shaped center stand is pivotally connected to the platform an axis extending perpendicularly to the longitudinal axis of the vehicle. The center stand in its deployed supporting position also engages the vehicle frame for keeping the vehicle upright.

A vehicle including a body frame, a front wheel and a rear wheel that tilt in a left-right direction of the vehicle during left and right turns is known. Patent Literature (hereinafter, referred to as "PTL") 1 and PTL 2, and Non-Patent Literature (hereinafter, referred to as "NPL") 1 disclose a vehicle including two front wheels disposed side by side.

The vehicles described in PTLs 1 and 2 and NPL 1 include a center stand attached to a power unit. The power unit is supported by a body frame so as to swing relative to the body frame along with a rear wheel (for example, see FIG. 5 of PTL 2).

### Citation List

### Patent Literature

PTL 1
   Japanese Patent Application Laid-Open No. 2005-313876
PTL 2
   U.S. Design Patent No. D547,242S

### Non-Patent Literature

NPL 1
Catalogo parti di ricambio, MP3 300 ie LT Mod. ZAPM64102, Piaggio & C. SpA

In the vehicle disclosed in PTL 2, the center stand is disposed so as to be switchable to a use position where the center stand supports the vehicle. The center stand includes a pedal. An operation method of the conventional center stand will be described. The user first stands by the vehicle. The user holds the front part of the vehicle using one hand and holds the rear part of the vehicle using the other hand to support the vehicle. The user then lifts the rear part of the vehicle upward while applying a load to the pedal by a foot. Accordingly, the center stand is switched to the use position.

An object of the present invention is to provide a vehicle including: a center stand switchable to a use position by an operation method different from the method used for the conventionally adopted center stand; and a body frame that is capable of tilting (hereinafter, referred to as "tiltable").

According to the present invention said object is solved by a vehicle having the features of independent claim 1. Preferred embodiments are laid down in the dependent claims.

A vehicle according to an aspect of the present invention (hereinafter, referred to as a vehicle according to a first aspect) is a tricycle and includes: a body frame tiltable in a left-right direction of the vehicle; a front wheel portion including two front wheels tiltable in the left-right direction of the vehicle along with the body frame; a rear wheel tiltable in the left-right direction of the vehicle along with the body frame; a seat including a seating surface on which a driver sits, the seating surface being at least partially disposed behind a rotation center of the front wheel portion and forward of a rotation center of the rear wheel in a front-rear direction of the body frame; a floor portion that includes a floor surface for the driver seated on the seat to put his/her feet on; a power unit held by the body frame, the power unit being configured to generate driving force of the rear wheel; a handlebar including a left grip disposed on the left in the left-right direction of the vehicle and a right grip disposed on the right in the left-right direction of the vehicle, the handlebar being configured to make a direction of the front wheel portion to changeable; a center stand including a left grounding portion disposed on the left in the left-right direction of the vehicle and a right grounding portion disposed on the right in the left-right direction of the vehicle, the center stand being supported by the body frame so as to be turnable relative to the body frame and being configured to turn relative to the body frame to be switchable between a use position in which the left and the right grounding portions are grounded, and a retracted position in which the left and the right grounding portions are off the ground; and a pedal that causes the center stand to turn from the retracted position to the use position by application of a load to the pedal, in which the center stand is configured to be switchable from the retracted position to the use position by application of a load to the pedal and application of a rearward force to the left and the right grips of the handlebar, in the retracted position, only the pedal of the center stand is disposed outside of the floor portion and the left and the right grounding portions are disposed inside of the floor portion in the left-right direction of the body frame.

According to the present invention, the center stand is switched to the use position by application of a load to the pedal and application of a rearward force to both of the left and the right grips of the handlebar. Thus, the user can switch the center stand to the use position by applying a load to the pedal and applying a force of pulling both arms rearward while holding the left and right grips of the handlebar by left and right hands. Therefore, the center stand of the vehicle including the body frame that is tiltable can be switched from the retracted position to the use position by an operation method different from the conventionally adopted method of lifting the rear part of the vehicle upward.

The present invention may also adopt the following aspects.

A vehicle according to a second aspect is the vehicle according to the first aspect in which, when the center stand is in the retracted position, the pedal is positioned forward of a front end of the seating surface of the seat and behind the rotation center of the front wheel portion in the front-rear direction of the body frame.

The center stands of the vehicles disclosed in PTLs 1 and 2 and NPL 1 are disposed behind the front end of the seating surface of the seat in the front-rear direction of the body frame. On the other hand, according to the vehicle of the second aspect, the user applies a load to the pedal disposed forward of the front end of the seating surface of the seat and behind the rotation center of the front wheel portion in the front-rear direction of the body frame, and thereby the center stand is switched to the use position. The user applies a load to the pedal disposed forward of the front end of the seating surface of the seat and behind the rotation center of the front wheel portion while holding the left and right grips of the handlebar by left and right hands. Thus, the operability is improved. Therefore, the center stand can be switched to the use position by an operation method different from the conventional method.

A vehicle according to a third aspect is the vehicle according to the first aspect in which, the center stand includes a support portion supported by the body frame to be turnable relative to the body frame, in which the support portion of the center stand is disposed forward of the front end of the seating surface of the seat and behind the rotation center of the front wheel portion in the front-rear direction of the body frame.

The center stands of the vehicles disclosed in PTLs 1 and 2 and NPL 1 are disposed behind the front end of the seating surface of the seat in the front-rear direction of the body frame. On the other hand, according to the vehicle of the third aspect, the center stand turns with the support portion as a fulcrum, and the support portion is disposed forward of the front end of the seating surface of the seat and behind the rotation center of the front wheel portion in the front-rear direction of the body frame. Along with the turning, the center stand is switched to the use position. Therefore, the center stand can be switched to the use position by an operation method different from the conventional method.

A vehicle according to a fourth aspect is the vehicle according to the third aspect in which, the support portion of the center stand is disposed forward of a rear end of the left grip and a rear end of the right grip of the handlebar in the front-rear direction of the body frame in a plan view with the vehicle in an upright state.

According to the vehicle of the fourth aspect, the center stand turns with the support portion as a fulcrum, and the support portion is disposed forward of the rear ends of the left and right grips of the handlebar. Along with the turning, the center stand is switched to the use position. Therefore, the center stand can be switched to the use position by an operation method different from the conventional method.

A vehicle according to a fifth aspect is the vehicle according to the third aspect in which, the power unit includes a crankcase that houses a crankshaft, and the support portion of the center stand is disposed forward of the crankcase in the front-rear direction of the body frame.

According to the vehicle of the fifth aspect, the center stand is supported so as to be turnable with the support portion disposed forward of the crankcase as a fulcrum. Therefore, the center stand can be switched to the use position by an operation method different from the conventional method.

A vehicle according to a sixth aspect is the vehicle according to the first aspect in which, the pedal is integral with the center stand, and the center stand is switched from the retracted position to the use position by application of a load to the pedal integral with the center stand and application of a rearward force to the left and the right grips of the handlebar.

According to the vehicle of the sixth aspect, the user applies a load to the pedal integrated with the center stand and applies a rearward force to the left and right grips of the handlebar while holding the left and right grips of the handlebar by left and right hands respectively, and the center stand is switched from the retracted position to the use position. Therefore, the load applied to the pedal by the user can be efficiently used to switch the position of the center stand, and the operability is good. As a result, the center stand can be switched to the use position by an operation method different from the conventional method.

A vehicle according to a seventh aspect is the vehicle according to the first aspect in which, the center stand further includes a restraint mechanism that restrains the center stand from turning to the retracted position from the use position when the center stand is in the use position.

According to the vehicle of the seventh aspect, the restraint mechanism restrains the center stand from turning to the retracted position from the use position when the center stand is in the use position. Therefore, a center stand different from the conventional center stand can be provided.

A vehicle according to an eighth aspect is the vehicle according to the first aspect in which, at least the left and the right grounding portions of the center stand and the rear wheel are grounded when the center stand is in the use position.

According to the vehicle of the eighth aspect, the left and right grounding portions of the center stand and the rear wheel are grounded when the center stand is in the use position. Therefore, the center stand can be switched to the use position by an operation method different from the conventional method.

A vehicle according to a ninth aspect is the vehicle according to the first aspect in which, at least the left and the right grounding portions of the center stand, the front wheel portion, and the rear wheel are grounded when the center stand is in the use position.

According to the vehicle of the ninth aspect, the vehicle is supported at a plurality of points including the left and the right grounding portions of the center stand, the front wheel portion, and the rear wheel, when the center stand is switched to the use position. Therefore, a center stand different from the conventional center stand can be provided.

### Advantageous Effects of Invention

The present invention can provide the vehicle including: a center stand switchable to a use position by an operation method different from the method used for the conventionally adopted center stand; and a tiltable body frame.

### Brief Description of Drawings

FIG. 1 is a perspective view showing a vehicle of an embodiment of the present invention;
FIG. 2 is a plan view showing the vehicle of the embodiment of the present invention;
FIG. 3 is a side view showing the vehicle of the embodiment of the present invention;
FIG. 4 is a front view showing a left front wheel, a right front wheel, a link mechanism, and their surroundings;
FIG. 5 is a plan view showing the left front wheel, the right front wheel, the link mechanism, and their surroundings;
FIG. 6 is a front view showing a state of the link mechanism and the surroundings of the link mechanism when the vehicle tilts;
FIG. 7 is a plan view showing a state of the link mechanism and the surroundings of the link mechanism when a direction of a handlebar is changed;
FIG. 8 is a perspective view describing a fixing structure of a center stand;
FIG. 9 is a plan view describing the fixing structure of the center stand;
FIG. 10 is a side view describing a disposition of the center stand;
FIG. 11 is a side view describing a variation of the disposition of the center stand; and
FIG. 12 is a schematic diagram showing peripheral units of the center stand.

### Description of Embodiment

An embodiment of the present invention will be described in detail with reference to the accompanying drawings.

### <Definition of Directions>

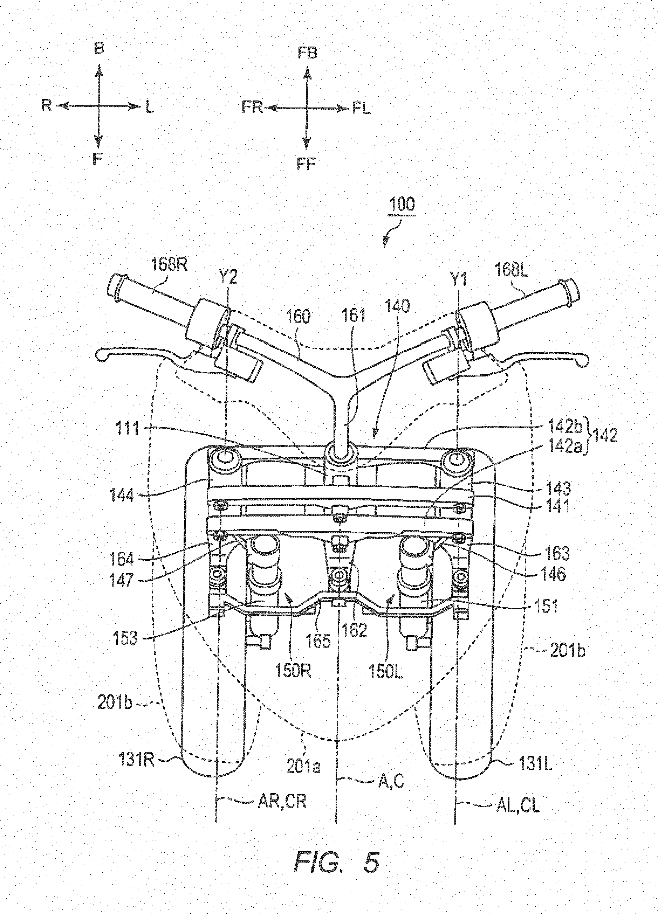

In the accompanying drawings, arrow F denotes a front direction of vehicle 100, and arrow B denotes a rear (or back) direction of vehicle 100. Arrow U denotes an upward direction of vehicle 100, and arrow D denotes a downward direction of vehicle 100. Arrow R denotes a right direction of vehicle 100, and arrow L denotes a left direction of vehicle 100. Body frame 110 tilts in a left-right direction of vehicle 100 relative to a vertical line to turn vehicle 100. Therefore, in addition to the directions of vehicle 100, directions based on body frame 110 are defined. Arrow FF in the accompanying drawings denotes a front direction based on body frame 110, and arrow FB denotes a rear direction based on body frame 110. Arrow FU denotes an upward direction based on body frame 110, and arrow FD denotes a downward direction based on body frame 110. Arrow FR denotes a right direction based on body frame 110, and arrow FL denotes a left direction based on body frame 110. In the description, a front-rear direction of vehicle 100, an up-down direction of vehicle 100, and the left-right direction of vehicle 100 denote front-rear, up-down, and left-right directions as viewed from a rider driving vehicle 100 and are directions based on vehicle 100. In this description, a front-rear direction of body frame 110, an up-down direction of body frame 110, and a left-right direction of body frame 110 are front-rear, up-down, and left-right directions as viewed from the rider driving vehicle 100 and are directions based on body frame 110. A center in a vehicle width direction denotes a center of the vehicle width in the left-right direction of vehicle 100. In other words, the center in the vehicle width direction denotes a center in the left-right direction of vehicle 100. In this description, an upright state denotes a state in which the up-down direction of body frame 110 coincides with the vertical line, and handlebar 160 is not steered. The state in which handlebar 160 is not turned denotes a state in which turning axes of front wheel are orthogonal to the front-rear direction of body frame 110 in a plan view. In other words, the state in which handlebar 160 is not steered is a state in which steering shaft 161 is not turned or a state in which handlebar 160 is not turned as shown in FIG. 5. In the upright state, the direction of vehicle 100 coincides with the direction of body frame 110. When body frame 110 tilts in the left-right direction relative to the vertical direction to turn vehicle 100, the left-right direction of vehicle 100 does not coincide with the left-right direction of body frame 110. The up-down direction of vehicle 100 does not coincide with the up-down direction of body frame 110, either. However, the front-rear direction of vehicle 100 coincides with the front-rear direction of body frame 110.

In the present description, an axis extending in the front-rear direction denotes not only an axis parallel to the front-rear direction of body frame 110, but also includes an axis tilted in a range of ±45 degrees relative to the front-rear direction of body frame 110. An axis extending in a direction closer to the front-rear direction than to the left-right direction and the up-down direction is included in the axis extending in the front-rear direction. Similarly, an axis extending in the up-down direction includes an axis tilted in a range of ±45 degrees relative to the up-down direction of body frame 110. An axis extending in a direction closer to the up-down direction than to the front-rear direction and the left-right direction is included in the axis extending in the up-down direction. An axis extending in the left-right direction includes an axis tilted in a range of ±45 degrees relative to the left-right direction of body frame 110. An axis extending in a direction closer to the left-right direction than to the front-rear direction and the up-down direction is included in the axis extending in the left-right direction.

In the present description, when the expression "extends in the front-rear direction" is used for a part of body frame 110, the expression holds true as long as the extending direction includes a component of body frame 110 in the front-rear direction, and the expression thus includes a mode in which the part extends in an oblique front-rear direction tilted up, down, left, or right.

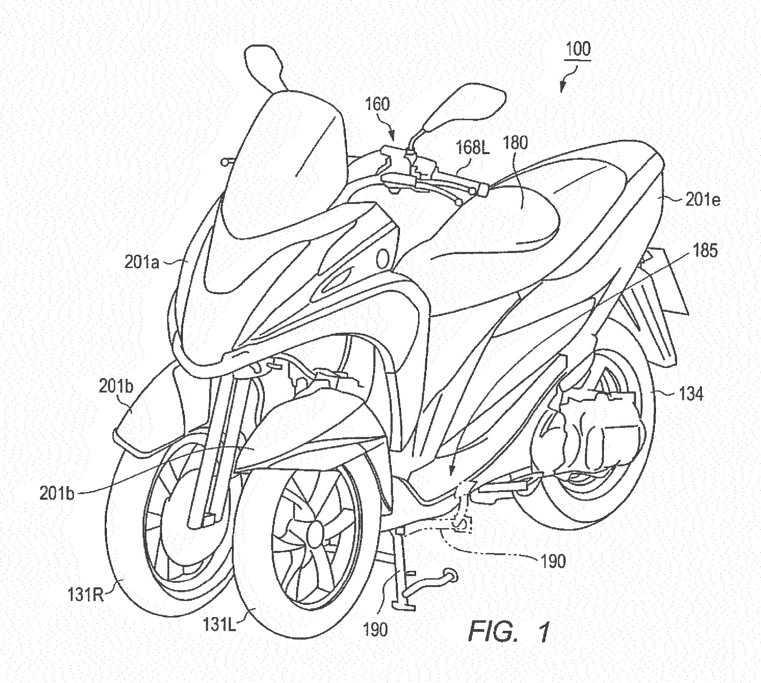

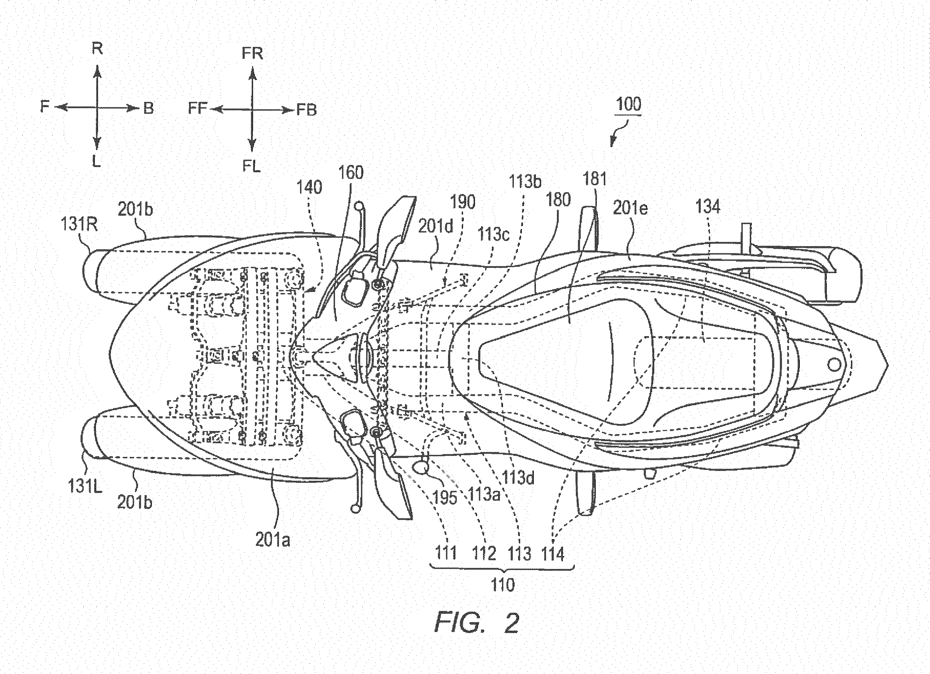

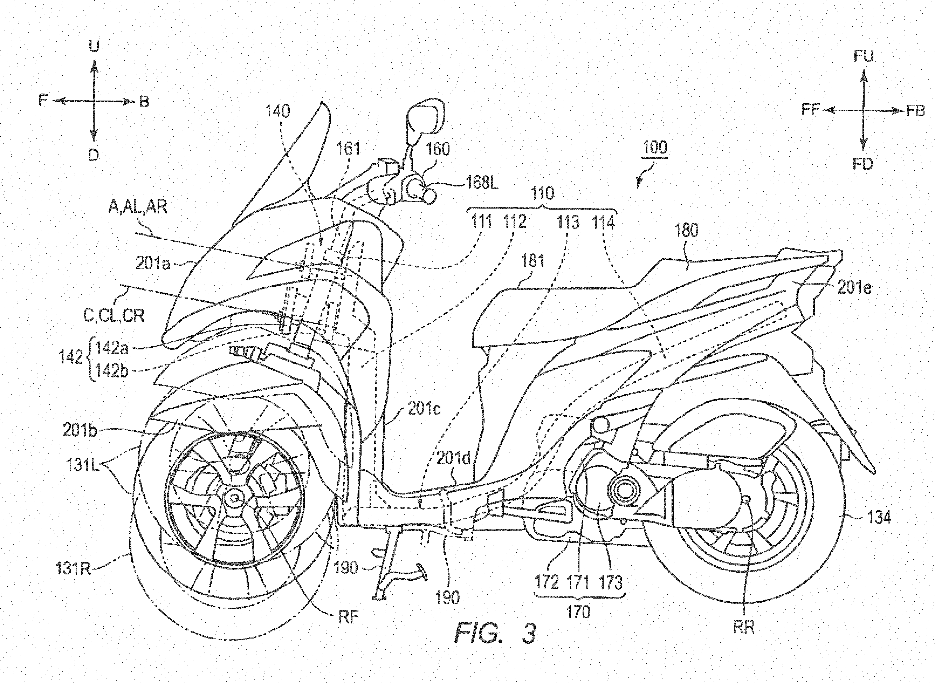

FIG. 1 is a perspective view showing a vehicle of an embodiment of the present invention. FIG. 2 is a plan view showing the vehicle of the embodiment. FIG. 3 is a side view showing the vehicle of the embodiment. In FIG. 3, alternate long and two short dashes lines indicate left front wheel 131L and right front wheel 131R when vehicle 100 tilts in the left-right direction.

As shown in FIG. 1, vehicle 100 of the embodiment includes left front wheel 131L, right front wheel 131R, one rear wheel 134, handlebar 160, seat 180, center stand 190, and body covers (201a, 201b, 201c, 201d, and 201e). As shown in FIGS. 2 and 3, vehicle 100 includes body frame 110, link mechanism 140, and power unit 170 (see FIG. 3). Left front wheel 131L and right front wheel 131R are equivalent to an example of a front wheel portion of the present invention.

Body frame 110 holds the components of vehicle 100. Body frame 110 includes link support 111, down frame 112, underframe 113, and rear frames 114. In FIGS. 2 and 3, broken lines indicate body frame 110 hidden under body covers (201a, 201b, 201c, 201d, and 201e).

Link support 111 is disposed on a front part of vehicle 100. Link support 111 supports link mechanism 140. Although not particularly limited, link support 111 also serves as a head tube in this embodiment. Link support 111 as a head tube is tilted relative to the vertical direction so that the upper part is positioned behind the lower part in a side view of the vehicle 100. Link support 111 as a head tube supports handlebar 160 and steering shaft 161. Steering shaft 161 is inserted to link support 111 as a head tube so as to be capable of turning (hereinafter, referred to as "turnable"). Steering shaft 161 is turnable around a center axis of vehicle 100 extending in the up-down direction.

Down frame 112 extends downward from link support 111 and is connected to underframe 113.

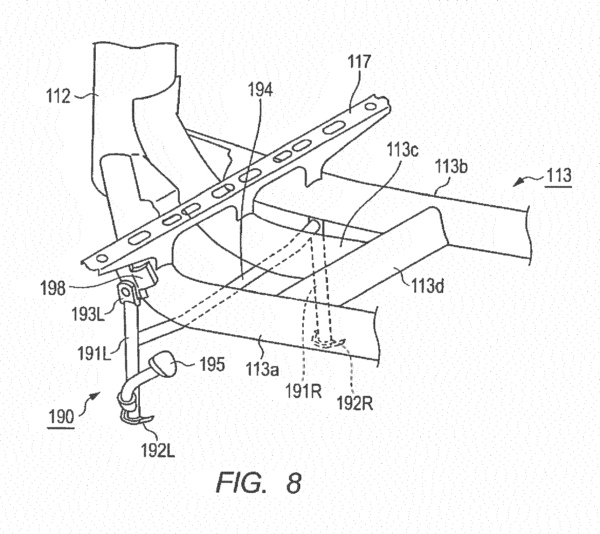

Underframe 113 includes left underframe 113a as a left frame portion, right underframe 113b as a right frame portion, intermediate underframe 113c, and side underframe 113d (see also FIGS. 2 and 8).

One end of left underframe 113a and one end of right underframe 113b are connected to a lower part of down frame 112. The other end of left underframe 113a is connected to left rear frame 114. The other end of right underframe 113b is connected to right rear frame 114. Left underframe 113a and right underframe 113b extend in the front-rear direction of body frame 110. Left underframe 113a and right underframe 113b are disposed side by side in the left-right direction of body frame 110. Left underframe 113a and right underframe 113b are disposed below a floor surface of floor portion 201d to support floor portion 201d.

Side underframe 113d is placed between left underframe 113a and right underframe 113b. One end of intermediate underframe 113c is connected to the lower part of down frame 112, and the other end is connected to side underframe 113d. Intermediate underframe 113c extends in the front-rear direction of body frame 110 between left underframe 113a and right underframe 113b.

Underframe 113 may be configured not to include either one or both of intermediate underframe 113c and side underframe 113d.

Rear frames 114 are disposed on the left and right of vehicle 100. Left rear frame 114 extends toward the rear part of vehicle 100 from the rear end of left underframe 113a. Right rear frame 114 extends toward the rear part of vehicle 100 from the rear end of right underframe 113b. Rear frames 114 support seat 180 and power unit 170. Power unit 170 may be supported by rear frames 114 through a swing arm so as to be swingable.

Power unit 170 generates driving force of rear wheel 134. As shown in FIG. 3, power unit 170 includes: engine 171; crankcase 172, which houses a crankshaft; and transmission case 173, which houses a transmission. Engine 171, crankcase 172, and transmission case 173 are disposed behind left front wheel 131L and right front wheel 131R in the front-rear direction of body frame 110. At least part of engine 171, crankcase 172, and transmission case 173 is disposed forward of a grounding portion of rear wheel 134 in the front-rear direction of body frame 110. Power unit 170 is disposed below seat 180.

Power unit 170 may be configured not to include the engine and the crankcase but to include a drive source, such as an electric motor, and a transmission.

The body cover includes front cover 201a, a pair of left and right front fenders 201b, leg shield 201c, floor portion 201d, and rear cover 201e.

Front cover 201a covers at least part of the front of link mechanism 140.

Leg shield 201c is positioned behind link mechanism 140 and behind at least part of left front wheel 131L and right front wheel 131R. Leg shield 201c is connected to floor portion 201d.

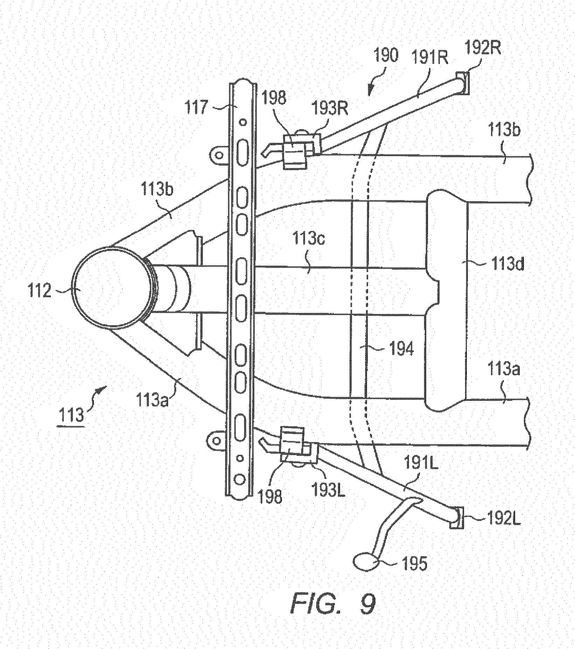

Floor portion 201d includes a floor surface for the rider seated on seat 180 to put his/her feet on. The floor surface is disposed forward of seat 180 and behind leg shield 201c in a plan view and is disposed at a position lower than upper ends of left front wheel 131L and right front wheel 131R in a side view. Although not particularly limited, the width of floor portion 201d is substantially the same as the length from the left end of left front wheel 131L to the right end of right front wheel 131R. Floor portion 201d is supported by left underframe 113a, right underframe 113b, intermediate underframe 113c, and beam material 117 installed above them (see FIGS. 8 and 9).

Rear cover 201e covers the surroundings of rear frames 114.

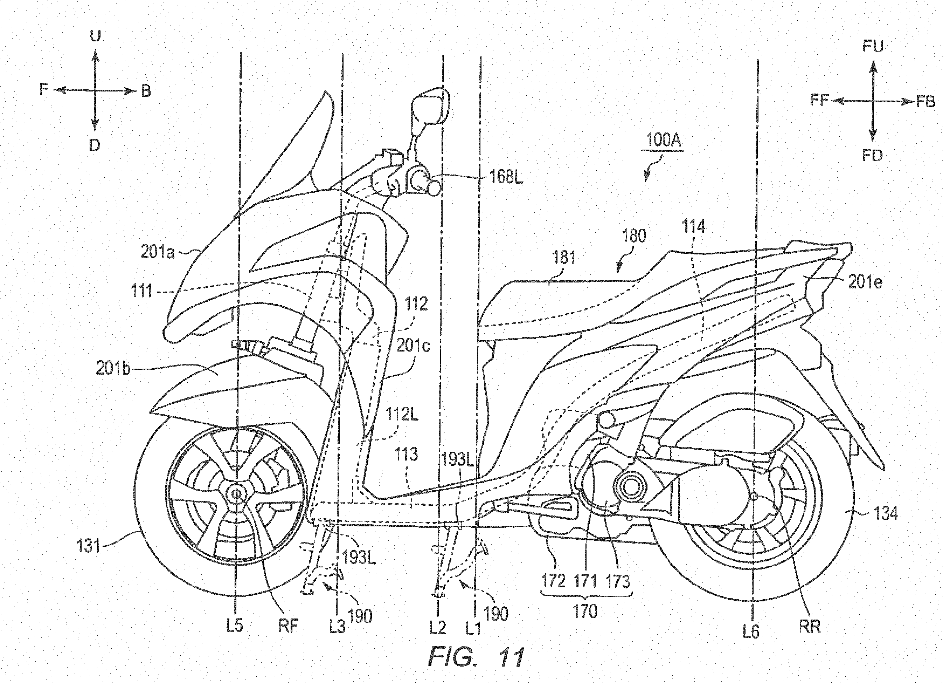

Seat 180 includes seating surface 181 on which the rider sits. The front end of seating surface 181 is disposed behind the rear ends of left front wheel 131L and right front wheel 131R, behind rotation center RF of front wheel portion 131 that is not turning, and behind virtual line segment L5 shown in FIG. 11, in the front-rear direction of body frame 110. At least part of seating surface 181 is disposed forward of the front end of rear wheel 134, forward of rotation center RR of rear wheel 134, and forward of virtual line segment L6 shown in FIG. 11.

Handlebar 160 includes left grip 168L and right grip 168R, and handlebar 160 is fixed to the upper part of steering shaft 161. When left front wheel 131L and right front wheel 131R face a direction parallel to the front-rear direction of body frame 110 (when left front wheel 131L and right front wheel 131R are not turning), left grip 168L is disposed on the left in the left-right direction of body frame 110. Right grip 168R is disposed on the right in the left-right direction of body frame 110.

Left front wheel 131L and right front wheel 131R are disposed side by side in the left-right direction of body frame 110. Left front wheel 131L and right front wheel 131R tilt in the left-right direction along with body frame 110.

Rear wheel 134 is supported by a swing arm that can swing relative to body frame 110. The swing arm may be supported by body frame 110. When power unit 170 is fixed to body frame 110, the swing arm may be supported by power unit 170. The swing arm is connected to rear frames 114 via a suspension. When suspension extends, the swing arm swings relative to rear frames 114, accordingly. Rear wheel 134 tilts in the left-right direction along with body frame 110.

### <Link Mechanism>

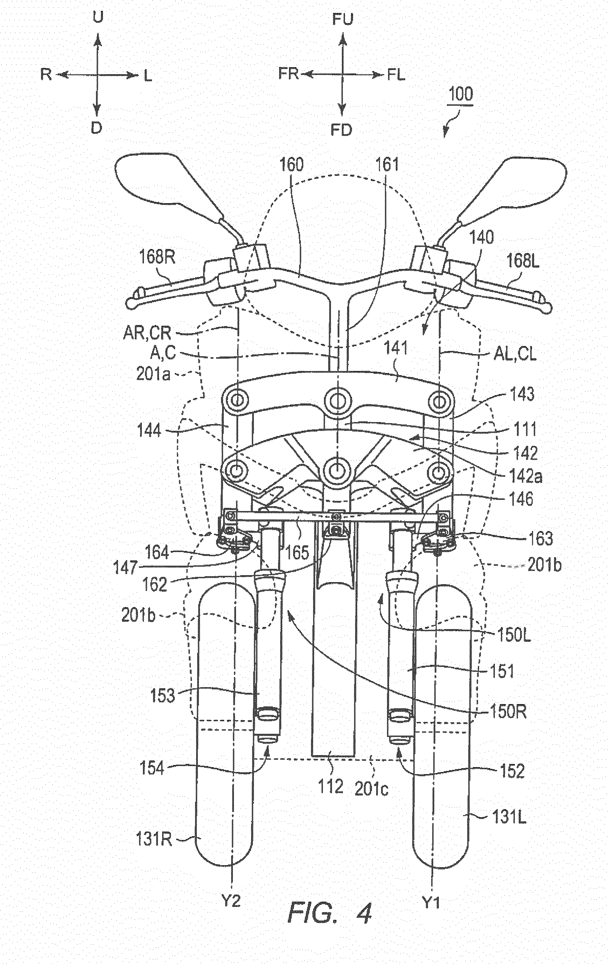

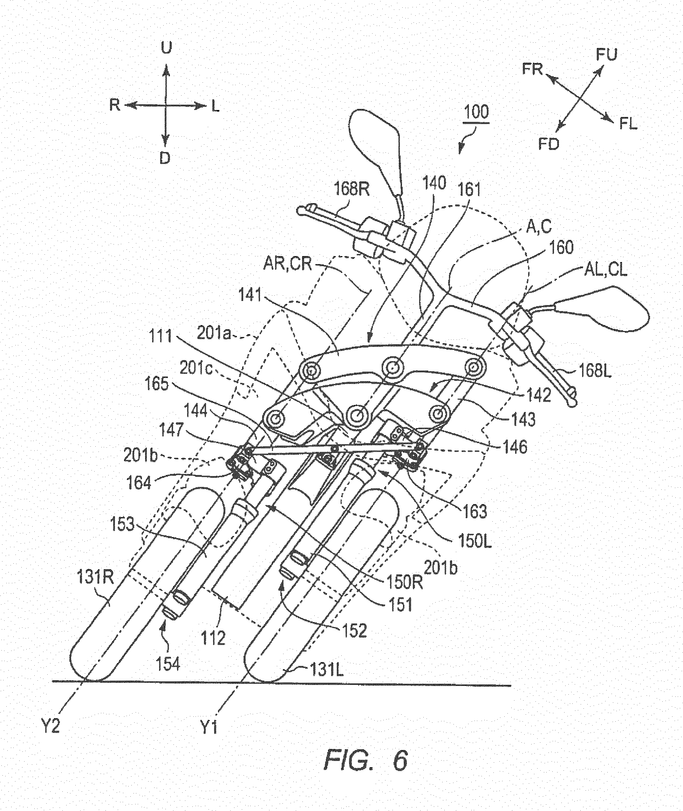

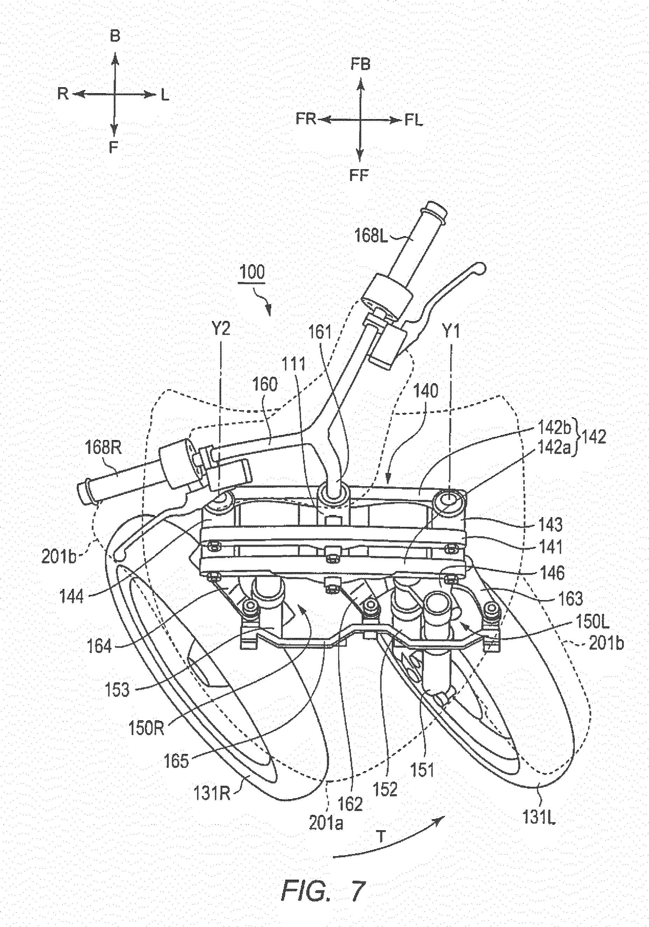

FIG. 4 is a front view showing the left front wheel, the right front wheel, the link mechanism, and their surroundings. FIG. 5 is a plan view showing the left front wheel, the right front wheel, the link mechanism, and their surroundings. FIG. 6 is a front view showing a state of the link mechanism and the surroundings of the link mechanism when the vehicle tilts. FIG. 7 is a plan view showing a state of the link mechanism and the surroundings of the link mechanism when the direction of the handlebar is changed.

The link mechanism 140 has a configuration of parallel four-bar linkage (also called parallelogram link).

Link mechanism 140 is supported by link support 111 of body frame 110. Link mechanism 140 includes upper cross member 141, lower cross member 142, left-side rod 143, and right-side rod 144 as components for performing a tilting action of vehicle 100.

As shown in FIG. 4, upper cross member 141 and lower cross member 142 of link mechanism 140 are disposed below handlebar 160 and above the upper ends of left front wheel 131L and right front wheel 131R, with body frame 110 in the upright state. As shown in FIG. 5, upper cross member 141 and lower cross member 142 of link mechanism 140 are disposed at positions overlapping with left front wheel 131L and right front wheel 131R in the front-rear direction of body frame 110. Upper cross member 141 and lower cross member 142 of link mechanism 140 are disposed behind rotation centers RF of left front wheel 131L and right front wheel 131R in the front-rear direction of body frame 110.

An intermediate portion of upper cross member 141 is supported by link support 111. Upper cross member 141 is supported so as to be turnable around upper axis A (see FIG. 3) extending in the front-rear direction of body frame 110. Specifically, upper axis A is parallel to plane FF-FU and is tilted 45 degrees or less in the direction of arrow FU from arrow FF.

A left end portion of upper cross member 141 is supported by left-side rod 143. Upper cross member 141 is turnable relative to left-side rod 143, around upper left axis AL parallel to upper axis A. A right end portion of upper cross member 141 is supported by right-side rod 144. Upper cross member 141 is turnable relative to right-side rod 144, around upper right axis AR parallel to upper axis A.

An intermediate portion of lower cross member 142 is supported by link support 111. Lower cross member 142 is supported so as to be turnable around lower axis C (see FIG. 3) parallel to upper axis A. Lower cross member 142 is disposed below upper cross member 141. Lower cross member 142 has substantially the same length as upper cross member 141 in the vehicle width direction and is disposed parallel to upper cross member 141.

A left end of lower cross member 142 is supported by left-side rod 143. Lower cross member 142 is turnable relative to left-side rod 143, around lower left axis CL parallel to lower axis C. A right end portion of lower cross member 142 is supported by right-side rod 144. Lower cross member 142 is turnable relative to right-side rod 144, around lower right axis CR parallel to lower axis C.

Although not particularly limited, lower cross member 142 of link mechanism 140 includes: front lower cross member 142a including a part positioned forward of link support 111, left-side rod 143, and right-side rod 144; and rear lower cross member 142b including a part positioned behind link support 111, left-side rod 143, and right-side rod 144 (see FIGS. 3 and 5) in the embodiment.

Left-side rod 143 is disposed on the left of link support 111 and extends parallel to the direction of the extension of link support 111. Left-side rod 143 is disposed above left front wheel 131L. Left-side rod 143 supports left shock absorber 150L described later in a manner that makes left shock absorber 150L turnable around left axis Y1.

Right-side rod 144 is disposed on the right of link support 111 and extends parallel to the direction of the extension of link support 111. Right-side rod 144 is disposed above right front wheel 131R. Right-side rod 144 supports right shock absorber 150R described later in a manner that makes right shock absorber 150R turnable around right axis Y2.

In this way, upper cross member 141, lower cross member 142, left-side rod 143, and right-side rod 144 are supported so that upper cross member 141 and lower cross member 142 maintain positions parallel to each other, and left-side rod 143 and right-side rod 144 maintain positions parallel to each other.

As shown in FIG. 6, link mechanism 140 tilts left front wheel 131L and right front wheel 131R when vehicle 100 tilts in the left-right direction (R-L direction). Link mechanism 140 also changes the height of left front wheel 131L and right front wheel 131R relative to each other in the up-down direction (direction of arrows FU and FD) of body frame 110 in response to tilting of body frame 110 in the left-right direction of vehicle 100.

### <Steering Mechanism>

A steering mechanism is disposed between handlebar 160 and left and right front wheels 131L and 131R. The steering mechanism includes steering shaft 161, center steering arm 162, tie rod 165, left steering arm 163, right steering arm 164, left shock absorber 150L, and right shock absorber 150R.

Left shock absorber 150L includes left dumper 151, left bracket 146, and left turn prevention mechanism 152. Left shock absorber 150L is supported by left-side rod 143 and tilts along with left-side rod 143.

Left damper 151 attenuates vibration from a road by, for example, a telescopic structure. An upper end of left damper 151 is fixed to left bracket 146. A lower end of the left damper supports left front wheel 131L. In this way, left damper 151 absorbs displacement of left front wheel 131L relative to an upper part of left damper 151 in the up-down direction of body frame 110. The expansion and contraction direction of left damper 151 may be tilted from the up-down direction of body frame 110. In this case, left front wheel 131L is also displaced relative to the upper part of left damper 151 in the front-rear direction or the left-right direction of body frame 110. In this case, left damper 151 also absorbs the displacement of left front wheel 131L in the front-rear direction or the left-right direction.

Left turn prevention mechanism 152 is disposed parallel to left damper 151. Left turn prevention mechanism 152 has a telescopic structure. An upper end of left turn prevention mechanism 152 is fixed to left bracket 146. A lower end of left turn prevention mechanism 152 supports left front wheel 131L.

Left damper 151 and left turn prevention mechanism 152 support left front wheel 131L to associate left bracket 146 with left front wheel 131L to prevent a relative change in the direction of left bracket 146 and the direction of left front wheel 131L.

Right shock absorber 150R includes right damper 153, right bracket 147, and right turn prevention mechanism 154. Right shock absorber 150R is supported by right-side rod 144 and tilts along with right-side rod 144.

Right damper 153 attenuates vibration from a road by, for example, a telescopic structure. An upper end of right damper 153 is fixed to right bracket 147. A lower end of right damper 153 supports right front wheel 131R. In this way, right damper 153 absorbs displacement of right front wheel 131R relative to an upper part of right damper 153 in the up-down direction of body frame 110. The expansion and contraction direction of right damper 153 may be tilted from the up-down direction of body frame 110. In this case, right front wheel 131R is also displaced relative to the upper part of right damper 153 in the front-rear direction or the left-right direction of body frame 110. In this case, right damper 153 also absorbs the displacement in the front-rear direction or the left-right direction of right front wheel 131R.

Right turn prevention mechanism 154 is disposed parallel to right damper 153. Right turn prevention mechanism 154 has a telescopic structure. An upper end of right turn prevention mechanism 154 is fixed to right bracket 147. A lower end of right turn prevention mechanism 154 supports right front wheel 131R.

Right damper 153 and right turn prevention mechanism 154 support right front wheel 131R to associate right bracket 147 with right front wheel 131R to prevent a relative change in the direction of right bracket 147 and the direction of right front wheel 131R.

Center steering arm 162 and tie rod 165 are disposed above left front wheel 131L and right front wheel 131R. One end portion of center steering arm 162 is fixed to steering shaft 161, and center steering arm 162 turns along with steering shaft 161. The other end portion of center steering arm 162 is supported by tie rod 165. Center steering arm 162 transmits the turning of steering shaft 161 to tie rod 165.

Left steering arm 163 is fixed to left bracket 146.

Right steering arm 164 is fixed to right bracket 147.

Tie rod 165 supports center steering arm 162, left steering arm 163, and right steering arm 164 and transmits the turning of center steering arm 162 to left steering arm 163 and right steering arm 164.

According to the configurations, when handlebar 160 is operated to turn steering shaft 161 and center steering arm 162, left bracket 146 and right bracket 147 turn at the same angle as shown in FIG. 7. As a result, left front wheel 131L and right front wheel 131R are steered in same direction T. The turning center of the steering of left front wheel 131L is set to overlap the grounding portion of left front wheel 131L, and the turning center of the steering of right front wheel 131R is set to overlap the grounding portion of right front wheel 131R.

### <Center Stand>

FIG. 8 is a perspective view describing a fixing structure of the center stand. FIG. 9 is a plan view describing a fixing structure of the center stand.

Center stand 190 includes supports (left support portion 193L and right support portion 193R), left support post 191L, right support post 191R, left grounding portion 192L, right grounding portion 192R, and link portion 194.

Pedal 195 is provided integrally with center stand 190.

Left grounding portion 192L is disposed on the left in the left-right direction of body frame 110. Left grounding portion 192L is formed on one end of left support post 191L. Left support portion 193L is disposed on the left in the left-right direction of body frame 110. Left support portion 193L is provided on the other end of left support post 191L.

Right grounding portion 192R is disposed on the right in the left-right direction of body frame 110. Right grounding portion 192R is formed on one end of right support post 191R. Right support portion 193R is disposed on the right in the left-right direction of body frame 110. Right support portion 193R is provided on the other end of right support post 191R.

Link portion 194 is placed between left support post 191L and right support post 191R and integrally turns left support post 191L and right support post 191R.

To switch center stand 190 from a retracted position to a use position, the user puts his/her feet on pedal 195 to apply a load to pedal 195. Pedal 195 extends to the left from left support post 191L, and pedal 195 is fixed to left support post 191L. Pedal 195 is provided integrally with left support post 191L

Center stand 190 is supported by body frame 110 so as to be turnable. This turning allows for switching of center stand 190 between the use position (indicated by a solid line in FIG. 1) and the retracted position (indicated by an alternate long and two short dashes line in FIG. 1).

Specifically, left support portion 193L is supported by left underframe 113a via bracket 198 so as to be turnable. Right support portion 193R is supported by right underframe 113b via bracket 198 so as to be turnable. Bracket 198 includes a stopper that comes into contact with either one or both of left support post 191L and right support post 191R when center stand 190 is turned from the retracted position to the use position. The stopper prevents left support post 191L and right support post 191R from turning beyond the use position.

FIG. 8 shows the use position of center stand 190. The use position refers to a position in which left support post 191L stands up until left grounding portion 192L is positioned forward of left support portion 193L in the front-rear direction of body frame 110, right support post 191R stands up until right grounding portion 192R is positioned forward of right support portion 193R, and left support post 191L or right support post 191R comes in contact with the stopper of bracket 198 and stands still. In the use position, at least left and right grounding portions 192L and 192R of center stand 190 and rear wheel 134 are grounded. Although not particularly limited, when center stand 190 is switched to the use position, left shock absorber 150L and right shock absorber 150R are extended, so that left front wheel 131L and right front wheel 131R are also grounded in this embodiment.

FIG. 9 shows the retracted position of center stand 190. The retracted position refers to a position in which left grounding portion 192L and right grounding portion 192R are separated from the ground, left grounding portion 192L is positioned behind left support portion 193L in the front-rear direction of body frame 110, right grounding portion 192R is positioned behind right support portion 193R, and center stand 190 is partially in contact with vehicle 100 and still.

Left support post 191L is disposed on the left of left underframe 113a in a plan view in both of the retracted position and the use position.

Right support post 191R is disposed on the right of right underframe 113b in a plan view in both of the retracted position and the use position.

In the retracted position, only pedal 195 of center stand 190 is disposed outside of floor portion 201d in the left-right direction of body frame 110.

Link portion 194 curves to avoid left underframe 113a and right underframe 113b when center stand 190 is in the retracted position. Specifically, when center stand 190 is in the retracted position, the upper end of the connection portion of right support post 191R and link portion 194 is disposed above the lower edge of right underframe 113b in the up-down direction of body frame 110 in a side view. When center stand 190 is in the retracted position, the upper end of link portion 194 is disposed below the lower end of right underframe 113b in a range where link portion 194 and right underframe 113b overlap in a plan view. When center stand 190 is in the retracted position, the upper end of link portion 194 is disposed below the lower end of left underframe 113a in a range where link portion 194 and left underframe 113a overlap in a plan view. When center stand 190 is in the retracted position, the upper end of the connection portion of left support post 191L and link portion 194 is disposed above the lower edge of left underframe 113a in a side view.

### <Disposition of Center Stand>

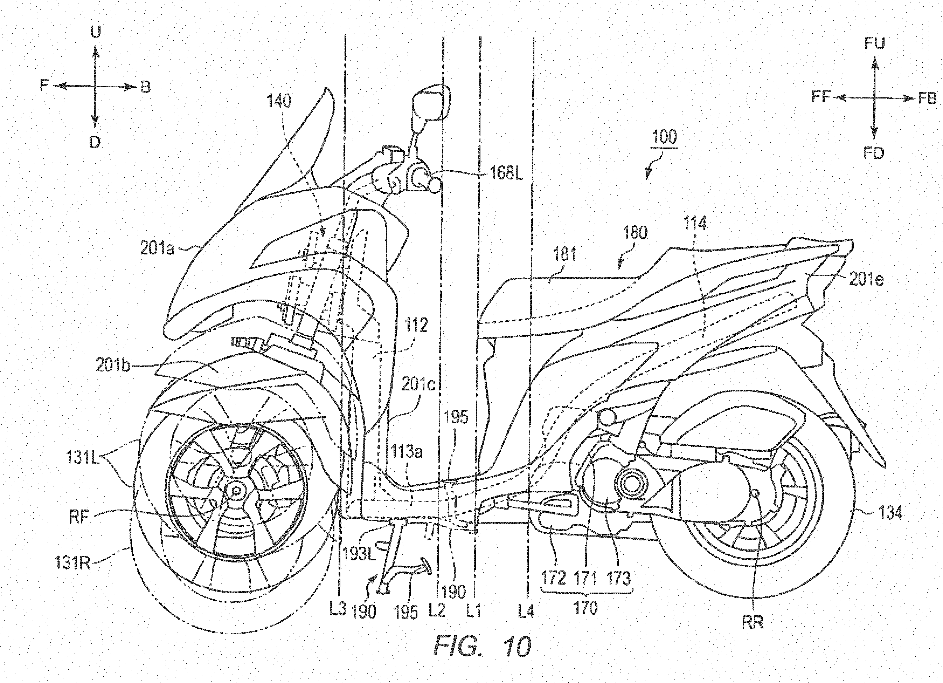

FIG. 10 is a side view describing a disposition of the center stand. In FIG. 10, alternate long and two short dashes lines indicate left front wheel 131L and right front wheel 131R when vehicle 100 banks in the left-right direction.

As shown in FIG. 10, left support portion 193L and right support portion 193R (see FIG. 9) of center stand 190 are disposed forward of virtual line segment L1 and behind virtual line segment L3 in the front-rear direction of body frame 110 with body frame 110 in the upright state. Left support portion 193L and right support portion 193R (see FIG. 9) of center stand 190 are disposed forward of virtual line segment L2 and behind virtual line segment L3 in the front-rear direction of body frame 110 with body frame 110 in the upright state. Virtual line segment L1 indicates a position of the front end of seating surface 181 of seat 180 in the front-rear direction of body frame 110. Virtual line segment L2 indicates positions of the rear ends of left grip 168L and right grip 168R of handlebar 160 in the front-rear direction of body frame 110 when left front wheel 131L and right front wheel 131R face the direction parallel to the front-rear direction of body frame 110 (when left front wheel 131L and right front wheel 131R are not turning). Virtual line segment L3 indicates a position of the rear ends of left front wheel 131L and right front wheel 131R in the front-rear direction of body frame 110.

Pedal 195 of center stand 190 is disposed forward of virtual line segment L1 and behind virtual line segment L3 in the front-rear direction of body frame 110, with vehicle 100 in the upright state and center stand 190 in the retracted position.

Left support portion 193L and right support portion 193R (see FIG. 9) of center stand 190 are disposed forward of the front end of crankcase 172 (position of virtual line segment L4) in the front-rear direction of body frame 110 with vehicle 100 in the upright state.

FIG. 11 is a side view describing a variation of the disposition of the center stand. In FIG. 11, alternate long and two short dashes lines indicate two dispositions that can be adopted by center stand 190.

As shown in FIG. 11, left support portion 193L and right support portion 193R (see FIG. 9) of center stand 190 may be disposed forward of virtual line segment L1 (front end of seating surface 181 of seat 180) and behind virtual line segment L2 (rear ends of left grip 168L and right grip 168R of handlebar 160 that is not turning) in the front-rear direction of body frame 110 with vehicle 100A in the upright state.

As shown in FIG. 11, left support portion 193L and right support portion 193R of center stand 190 may be disposed behind virtual line segment L5 (rotation center RF of front wheel portion 131 that is not turning) and forward of virtual line segment L3 (rear end of front wheel portion 131 that is not turning) in the front-rear direction of body frame 110 with vehicle 100A in the upright state.

For example, left support portion 193L and right support portion 193R of center stand 190 can be disposed forward of the rear end of front wheel portion 131 in vehicle 100A including only one front wheel portion 131 and including left down frame 112L and right down frame (not shown) provided side by side so as to overlap with front wheel portion 131 in a side view.

### <Peripheral Units of Center Stand>

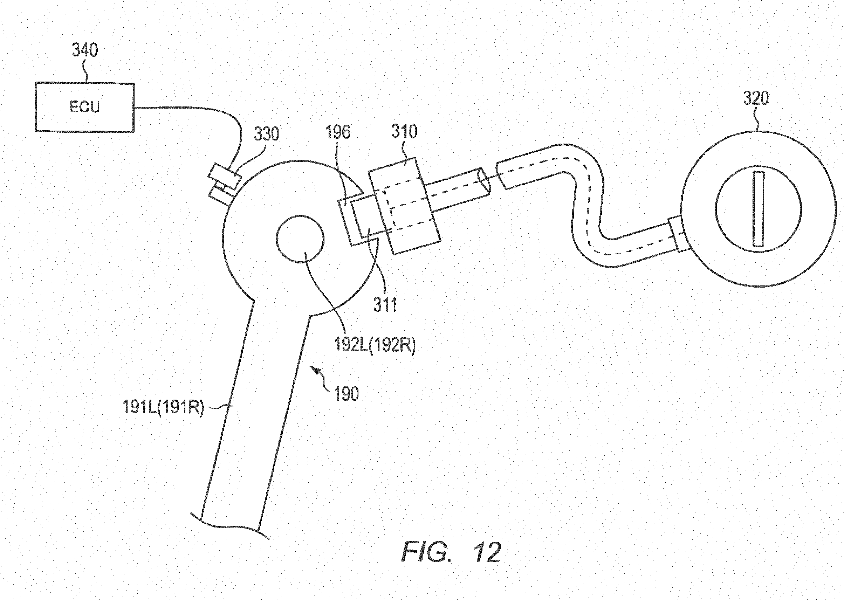

FIG. 12 is a schematic diagram showing peripheral units of the center stand.

Vehicle 100 of this embodiment further includes restraint mechanism 310, release unit 320, detection switch 330, and electronic control unit (ECU) 340.

Restraint mechanism 310 is a mechanism that fixes center stand 190 to restrain center stand 190 from turning to the retracted position from the use position when center stand 190 is in the use position. Although not particularly limited, restraint mechanism 310 can be a structure in which locking piece 311 enters groove 196 of center stand 190 to fix center stand 190.

Release unit 320 can release the fixation of restraint mechanism 310 through a specific operation of the user. Although not particularly limited, a main switch is provided with the function of release unit 320 in this embodiment. Locking piece 311 of restraint mechanism 310 can be pulled back by key operation, and the fixation of center stand 190 by restraint mechanism 310 can be released.

Detection switch 330 detects the state that center stand 190 is set at the use position and outputs a detection signal to ECU 340.

ECU 340 controls ignition of the engine and controls fuel injection. ECU 340 stops the ignition of the engine based on the output of detection switch 330 when center stand 190 is in the use position. Alternatively, ECU 340 controls the amount of fuel injection to reduce the amount of fuel injection below a certain level when center stand 190 is in the use position, thereby controlling the engine speed to prevent the engine speed from becoming higher than the engine speed during idling.

### <Advantageous Effects of Embodiment>

As described, a load is applied to pedal 195, and a rearward force is applied to left grip 168L and right grip 168R of handlebar 160 to switch center stand 190 to the use position in vehicle 100 of the embodiment. Therefore, the user can switch center stand 190 to the use position by applying a load to pedal 195 and applying the force of pulling both arms rearward while holding left grip 168L and right grip 168R of handlebar 160 by left and right hands. Therefore, center stand 190 of vehicle 100 including body frame 110 that is tiltable can be switched from the retracted position to the use position by an operation method different from the conventionally adopted method of lifting the rear part of the vehicle upward.

According to vehicle 100 of the embodiment, the user applies a load to pedal 195 disposed forward of the front end of seating surface 181 of seat 180 and behind rotation center RF of left front wheel 131L and right front wheel 131R in the front-rear direction of body frame 110, and center stand 190 is switched to the use position. The user applies a load to pedal 195 disposed forward of the front end of seating surface 181 of seat 180 and behind rotation center RF of left front wheel 131L and right front wheel 131R while holding left grip 168L and right grip 168R of handlebar 160 by left and right hand. Thus, the operability is improved. Therefore, center stand 190 can be switched to the use position by an operation method different from the conventional method.

According to vehicle 100 of the embodiment, center stand 190 turns with left support portion 193L and right support portion 193R as fulcrums, and left support portion 193L and right support portion 193R are disposed forward of the front end of seating surface **181** of seat 180 and behind turn axis RF of left front wheel 131L and right front wheel 131R in the front-rear direction of body frame 110. Along with the turning, center stand 190 is switched to the use position. Therefore, center stand 190 can be switched to the use position by an operation method different from the conventional method.

According to vehicle 100 of the embodiment, center stand 190 turns with left support portion 193L and right support portion 193R as fulcrums, and left support portion 193L and right support portion 193R are disposed forward of the rear end of left grip 168L and the rear end of right grip 168R of handlebar 160. Center stand 190 is set at the use position as a result of the turning. Therefore, center stand 190 can be switched to the use position by an operation method different from the conventional method.

According to vehicle 100 of the embodiment, center stand 190 is supported so as to be turnable with left support portion 193L and right support portion 193R disposed forward of crankcase 172 as fulcrums. Therefore, center stand 190 can be switched to the use position by an operation method different from the conventional method.

According to vehicle 100 of this embodiment, the user applies a load to pedal 195 integrated with center stand 190 and applies a backward force to left grip 168L and right grip 168R of handlebar 160 while holding left grip 168L and right grip 168R of handlebar 160 by left and right hands, and center stand 190 is switched from the retracted position to the use position. Therefore, the load applied to pedal 195 by the user can be efficiently used to switch the position of center stand 190, and the operability is excellent. As a result, center stand 190 can be switched to the use position by an operation method different from the conventional method.

According to vehicle 100 of this embodiment, pedal 195 and center stand 190 are integrated. Therefore, while holding left grip 168L and right grip 168R of handlebar 160 by left and right hands, the user applies a load to pedal 195 of center stand 190 that turns with left support portion 193L and right support portion 193R as fulcrums, and left support portion 193L and right support portion 193R are disposed forward of the front end of seating surface **181** of seat 180 and behind turn axis RF of left front wheel 131L and right front wheel 131R. As a result, the operability is improved.

According to vehicle 100 of this embodiment, restraint mechanism 310 restrains center stand 190 from turning to the retracted position from the use position when center stand 190 is in the use position. Therefore, center stand 190 different from the conventional center stand can be provided.

At least left grounding portion 192L and right grounding portion 192R of center stand 190 and rear wheel 134 are grounded when center stand 190 is in the use position, and center stand 190 can be switched to the use position by an operation method different from the conventional method.

According to vehicle 100 of this embodiment, vehicle 100 is supported at a plurality of points including left grounding portion 192L and right grounding portion 192R of center stand 190, left front wheel 131L, right front wheel 131R, and rear wheel 134, when center stand 190 is switched to the use position. Therefore, center stand 190 different from the conventional center stand can be realized.

An embodiment of the present invention has been described.

The vehicle includes two front wheels and only one rear wheel.

Left support portion 193L and right support portion 193R of center stand 190 and pedal 195 in the retracted position are disposed as shown in FIG. 10 in the example described in this embodiment. However, the disposition of the center stand in the present invention is not limited as long as the center stand can be switched from the retracted position to the use position by applying a load to the pedal and applying a rearward force to the left grip and the right grip of the handlebar. For example, the disposition of left support portion 193L and right support portion 193R of center stand 190 and pedal 195 can be changed as described with reference to FIG. 11.

Left support portion 193L and right support portion 193R of center stand 190 are disposed forward of crankcase 172 in the example described in this embodiment. However, crankcase 172 may be disposed at a position closer to the front wheel portion (for example, left front wheel 131L and right front wheel 131R) than to rear wheel 134 in the front-rear direction of body frame 110. When crankcase 172 is disposed at a position closer to the front wheel portion (for example, left front wheel 131L and right front wheel 131R) than to rear wheel 134, left support portion 193L and right support portion 193R of center stand 190 may be disposed behind the front end of crankcase 172.

Pedal 195 is integrated with left support post 191L in the example described in this embodiment. However, the pedal may be configured in any way as long as the pedal is configured according to claim 1. For example, the pedal may be separated from center stand 190. In this case, a power transmission mechanism can be placed between the pedal and center stand 190. When the pedal is operated, the power transmission mechanism may be configured to transmit the motion of the pedal to center stand 190 to move center stand 190 from the retracted position to the use position.

In this embodiment, the front wheel portion (left front wheel 131L and right front wheel 131R) and one rear wheel 134 are grounded when center stand 190 is in the use position. However, the front wheel portion (left front wheel 131L and right front wheel 131R) may move upward from the ground when center stand 190 is in the use position in the vehicle of the present invention.

Although left grip 168L and right grip 168R are provided on handlebar 160 in the example described in this embodiment, more than two grips may be provided.

In this embodiment, the configuration of the center stand is specifically described with reference to the accompanying drawings. However, the center stand may be configured in any way as long as the center stand is configured according to claim 1. For example, although center stand 190 is grounded through left grounding portion 192L and right grounding portion 192R in this description, the number of grounding portions may be more than two. Center stand 190 includes left support post 191L, right support post 191R, left support portion 193L, right support portion 193R, and link portion 194 in the description. However, the specific configuration of the center stand is not particularly limited, and the center stand can include only one support post and only one support. The center stand can include more than two support posts or more than two supports.

Vehicle 100 includes left front wheel 131L and right front wheel 131R as a front wheel portion.

The seat according to the present invention is not limited to the specific configuration described in this embodiment, and the seat may be configured in any way as long as at least part of the seating surface is disposed behind the rotation center of the front wheel portion and forward of the rotation center of the rear wheel in the front-rear direction of the body frame. The seat according to the present invention may include a seating surface of a tandem rider (fellow passenger) in addition to the seating surface of the rider, and the position of the seating surface of the tandem rider is not particularly limited.

Vehicle 100 includes floor portion 201d forward of seat 180 in a plan view in the example described in the embodiment.

The present invention can be embodied by a large number of different modes. This disclosure should be construed as providing embodiments of the present invention. A large number of illustrative embodiments are described here with the understanding that the embodiments are not intended to limit the present invention to the preferred embodiments described and/or illustrated here.

Some illustrative embodiments of the present invention are described here. The present invention is not limited to various preferred embodiments described here.

### Industrial Applicability

The present invention is useful for a vehicle including a front wheel portion and a rear wheel that tilt in the left-right direction of the vehicle along with a body frame.

### Reference Signs List

- 100, 100A: vehicle
- 110: body frame
- 131: front wheel portion
- 131L: left front wheel
- 131R: right front wheel
- 134: rear wheel
- 160: handlebar
- 161: steering shaft
- 168L: left grip
- 168R: right grip
- 170: power unit
- 172: crankcase
- 180: seat
- 181: seating surface
- 201d: floor portion
- 190: center stand
- 191L: left support post
- 191R: right support post
- 192L: left grounding portion
- 192R: right grounding portion
- 193L: left support portion
- 193R: right support portion
- 194: link portion

## Claims

1. A tricycle vehicle comprising:
a body frame (110) tiltable in a left-right direction of the vehicle;
a front wheel portion (131) including two front wheels (131L, 131R), being a left front wheel (131L) and a right front wheel (131R), tiltable in the left-right direction of the vehicle along with the body frame (110);
a rear wheel (134) tiltable in the left-right direction of the vehicle along with the body frame (110);
a seat (180) including a seating surface (181) on which a driver sits, the seating surface (181) being at least partially disposed behind a rotation center (RF) of the front wheel portion (131) and forward of a rotation center (RR) of the rear wheel (134) in a front-rear direction of the body frame (110);
a floor portion (201d) that includes a floor surface for the driver seated on the seat (180) to put his/her feet on;
a power unit (170) held by the body frame (110), the power unit (170) being configured to generate driving force of the rear wheel (134);
a handlebar (160) including a left grip (168L) disposed on the left in the left-right direction of the vehicle and a right grip (168R) disposed on the right in the left-right direction of the vehicle, the handlebar (160) being configured to make a direction of the front wheel portion (131) changeable;
a center stand (190) including a left grounding portion (192L) disposed on the left in the left-right direction of the vehicle and a right grounding portion (192R) disposed on the right in the left-right direction of the vehicle, the center stand (190) being supported by the body frame (110) so as to be turnable relative to the body frame (110) and being configured to turn relative to the body frame (110) to be switchable between a use position in which the left and the right grounding portions (192L, 192R) are grounded, and a retracted position in which the left and the right grounding portions (192L,192R) are off the ground; and
a pedal (195) that causes the center stand (190) to turn from the retracted position to the use position by application of a load to the pedal (195), wherein
the center stand (190) is configured to be switchable from the retracted position to the use position by application of a load to the pedal (195) and application of a rearward force to the left and the right grips (168L, 168R) of the handlebar (160), **characterized in that** in the retracted position,
only the pedal (195) of the center stand (190) is disposed outside of the floor portion (201d) and the left and the right grounding portions (192L, 192R) are disposed inside of the floor portion (201d) in the left-right direction of the body frame (110).

2. The tricycle vehicle according to claim 1, wherein when the center stand (190) is in the retracted position, the pedal (195) is positioned forward of a front end of the seating surface (181) of the seat (180) and behind the rotation center (RF) of the front wheel portion (131) in the front-rear direction of the body frame (110).

3. The tricycle vehicle according to claim 1, wherein the center stand (190) includes a support portion (193L,193R) supported by the body frame (110) to be turnable relative to the body frame (110), wherein
the support portion (193L,193R) of the center stand (190) is disposed forward of the front end of the seating surface (181) of the seat (180) and behind the rotation center (RF) of the front wheel portion (131) in the front-rear direction of the body frame (110).

4. The tricycle vehicle according to claim 3, wherein the support portion (193L,193R) of the center stand (190) is disposed forward of a rear end of the left grip (168L) and a rear end of the right grip (168R) of the handlebar (160) in the front-rear direction of the body frame (110) in a plan view with the vehicle in an upright state.

5. The tricycle vehicle according to claim 3, wherein the power unit (170) includes a crankcase (172) that houses a crankshaft, and
the support portion (193L,193R) of the center stand (190) is disposed forward of the crankcase (172) in the front-rear direction of the body frame (110).

6. The tricycle vehicle according to claim 1, wherein the pedal (195) is integral with the center stand (190).

7. The tricycle vehicle according to claim 1, wherein the center stand (190) further includes a restraint mechanism (310) that restrains the center stand (190) from turning to the retracted position from the use position when the center stand (190) is in the use position.

8. The tricycle vehicle according to claim 1, wherein at least the left and the right grounding portions (192L,192R) of the center stand (190) and the rear wheel (134) are grounded when the center stand (190) is in the use position.

9. The tricycle vehicle according to claim 1, wherein at least the left and the right grounding portions (192L, 192R) of the center stand (190), the front wheel portion (131), and the rear wheel (134) are grounded when the center stand (190) is in the use position.

## Patentansprüche

1. Ein dreirädriges Fahrzeug, das umfasst:
einen Körper-Rahmen (110), der in Links-Rechts-Richtung des Fahrzeugs kippbar ist; einen Vorder-Rad-Abschnitt (131), der zwei Vorder-Rädern (131L,131R), die ein linkes Vorderrad (131L) und ein rechtes Vorderrad (131R) sind, beinhaltete, die zusammen mit dem Körper-Rahmen (110) in der Links-Rechts-Richtung des Fahrzeugs kippbar sind;
ein Hinter-Rad (134), das zusammen mit dem Körper-Rahmen (110) in Links-Rechts-Richtung des Fahrzeugs kippbar ist;
einen Sitz (180), der eine Sitz-Fläche (181), auf der ein Fahrer sitzt, beinhaltet, die Sitz-Fläche (181) ist zumindest teilweise hinter einem Dreh-Zentrum (RF) des Vorder-Rad-Abschnitts (131) und vor einem Dreh-Zentrum (RR) des Hinter-Rads (134) in einer Vorwärts-Rückwärts-Richtung des Körper-Rahmens (110) positioniert;
einen Boden-Abschnitt (201d), der eine Boden-Fläche beinhaltet, für den Fahrer, der auf dem Sitz (180) sitz, um seine/ihre Füße abzusetzen;
eine Leistungs-Einheit (170), die durch den Körper-Rahmen (110) gehalten wird, die Leistungs-Einheit (170) ist konfiguriert, um Antriebs-Kraft von dem Hinter-Rads (134) zu erzeugen;
eine Lenk-Stange (160), die einen linken Griff (168L), der links in der Links-Rechts-Richtung des Fahrzeugs angeordnet ist, und einen rechten Griff (168R), der rechts in der Links-Rechts-Richtung des Fahrzeugs angeordnet ist, beinhaltet, die Lenk-Stange (160) ist konfiguriert, um eine Richtung des Vorder-Rad-Abschnitts (131) veränderbar zu machen;
einen Mittel-Ständer (190), der einen linken Grund-Abschnitt (192L), der links in der Links-Rechts-Richtung des Fahrzeugs angeordnet ist, und einem rechten Grund-Abschnitt (192R), der rechts in der Links-Rechts-Richtung des Fahrzeugs angeordnet ist, beinhaltet, der Mittel-Ständer (190) ist durch den Körper-Rahmen (110) gelagert, so dass er relativ zu dem Körper-Rahmen (110) drehbar ist, und ist konfiguriert, so dass er relativ zu dem Körper-Rahmen (110) drehbar ist, um zwischen einer Gebrauchsposition, in welcher der linke und der rechte Grund-Abschnitt (192L, 192R) am Boden sind, und einer zurückgezogenen Position, in welcher der linke und der rechte Grund-Abschnitt (192L, 192R) vom Boden entfernt sind, umschaltbar zu sein;
und
ein Pedal (195), das bewirkt, dass sich der Mittel-Ständer (190) von der zurückgezogenen Position in die Gebrauchsposition dreht, durch Aufbringen einer Last auf das Pedal (195), wobei
der Mittel-Ständer (190) konfiguriert ist, um von der zurückgezogenen Position in die Gebrauchsposition durch Aufbringen einer Last auf das Pedal (195) und durch Aufbringen einer nach hinten gerichteten Kraft auf den linken und den rechten Griff (168L, 168R) des Lenkers (160) umschaltbar zu sein, **dadurch gekennzeichnet, dass** in der zurückgezogenen Position, nur das Pedal (195) des Mittel-Ständers (190) außerhalb des Boden-Abschnitts (201d) positioniert ist, und der linke und der rechte Grund-Abschnitt (192L, 192R) sind innerhalb des Boden-Abschnitts (201d) in Links-Rechts-Richtung des Körper-Rahmens (110) angeordnet.

2. Das dreirädrige Fahrzeug gemäß Anspruch 1, wobei, wenn der Mittel-Ständer (190) in der zurückgezogenen Position ist, ist das Pedal (195) vor einem vorderen Ende der Sitz-Fläche (181) des Sitzes (180) und hinter dem Dreh-Zentrum (RF) des Vorder-Rad-Abschnitts (131) in der Vorwärts-Rückwärts-Richtung des Körper-Rahmens (110) positioniert.

3. Das dreirädrige Fahrzeug gemäß Anspruch 1, wobei der Mittel-Ständer (190) einen Lager-Abschnitt (193L, 193R) beinhaltet, der durch den Körper-Rahmen (110) gelagert ist, um relativ zum Körper-Rahmen (110) drehbar zu sein, wobei
der Lager-Abschnitt (193L, 193R) des Mittel-Ständers (190) vor dem vorderen Ende der Sitz-Fläche (181) des Sitzes (180) und hinter dem Dreh-Zentrum (RF) des Vorder-Rad-Abschnitts (131) in der Vorwärts-Rückwärts-Richtung des Körper-Rahmens (110) angeordnet ist.

4. Das dreirädrige Fahrzeug gemäß Anspruch 3, wobei der Lager-Abschnitt (193L, 193R) des Mittel-Ständers (190) vor einem hinteren Ende des linken Griffs (168L) und einem hinteren Ende des rechten Griffs (168R) der Lenk-Stange (160) in der Vorwärts-Rückwärts-Richtung des Körper-Rahmens (110) in einer Draufsicht mit dem Fahrzeug in einem aufrechten Zustand positioniert ist.

5. Das dreirädrige Fahrzeug gemäß Anspruch 3, wobei die Leistungs-Einheit (170) ein Kurbel-Gehäuse (172) beinhaltet, das eine Kurbel-Welle aufnimmt, und
der Lager-Abschnitt (193L,193R) des Mittel-Ständers (190) vor dem Kurbel-Gehäuse (172) in Vorwärts-Rückwärts-Richtung des Körper-Rahmens (110) angeordnet ist.

6. Das dreirädrige Fahrzeug gemäß Anspruch 1, wobei das Pedal (195) integral mit dem Mittel-Ständer (190) ist.

7. Das dreirädrige Fahrzeug gemäß Anspruch 1, wobei der Mittel-Ständer (190) ferner einen Rückhalte-Mechanismus (310) beinhaltet, der den Mittel-Ständer (190) daran hindert, sich aus der Gebrauchsposition in die zurückgezogene Position zu drehen, wenn der Mittel-Ständer (190) in der Gebrauchsposition ist.

8. Das dreirädrige Fahrzeug gemäß Anspruch 1, wobei zumindest der linke und der rechte Grund-Abschnitt (192L, 192R) des Mittel-Ständers (190) und des Hinter-Rads (134) am Boden sind, wenn der Mittel-Ständer (190) in der Gebrauchsposition ist.

9. Das dreirädrige Fahrzeug gemäß Anspruch 1, wobei zumindest der linke und der rechte Grund-Abschnitt (192L, 192R) des Mittel-Ständers (190), der Vorder-Rad-Abschnitt (131) und das Hinter-Rad (134) am Boden sind, wenn der Mittel-Ständer (190) in der Gebrauchsposition ist.

## Revendications

1. Véhicule tricycle comprenant :
un corps de châssis (110) inclinable en direction gauche-droite du véhicule ;
une portion de roue avant (131) comprenant deux roues avant (131L, 131R), soit une roue avant gauche (131L) et une roue avant droite (131R), inclinables en direction gauche-droite du véhicule conjointement au corps de châssis (110) ;
une roue arrière (134) inclinable en direction gauche-droite du véhicule conjointement au corps de châssis (110) ;
un siège (180) comprenant une surface d'assise (181) sur laquelle s'assied un conducteur, la surface d'assise (181) étant disposée au moins partiellement en arrière du centre de rotation (RF) de la portion de roue avant (131) et en avant du centre de rotation (RR) de la roue arrière (134) en direction avant-arrière du corps de châssis (110) ;
une portion de plancher (201d) qui comprend une surface de plancher sur laquelle le conducteur assis sur le siège (180) peut poser ses pieds ;
un groupe moteur (170) maintenu par le corps de châssis (110), le groupe moteur (170) étant configuré pour générer une force d'entraînement de la roue arrière (134) ;
un guidon (160) comprenant une poignée gauche (168L) disposée sur la gauche en direction gauche-droite du véhicule et une poignée droite (168R) disposée sur la droite en direction gauche-droite du véhicule, le guidon (160) étant configuré pour pouvoir changer la direction de la portion de roue avant (131) ;
une béquille centrale (190) comprenant une portion de contact au sol gauche (192L) disposée sur la gauche en direction gauche-droite du véhicule et une portion de contact au sol droite (192R) disposée sur la droite en direction gauche-droite du véhicule, la béquille centrale (190) étant supportée par le corps de châssis (110) de manière à pouvoir pivoter par rapport au corps de châssis (110) et configurée pour pivoter par rapport au corps de châssis (110) pour être commutable entre une position d'utilisation dans laquelle les portions de contact au sol gauche et droite (192L, 192R) sont en contact avec le sol, et une position rétractée dans laquelle les portions de contact au sol gauche et droite (192L, 192R) ne sont plus en contact avec le sol ; et
une pédale (195) qui provoque un pivotement de la béquille centrale (190) de la position rétractée à la position d'utilisation par l'application d'une charge sur la pédale (195), dans lequel
la béquille centrale (190) est configurée pour pouvoir commuter de la position rétractée à la position d'utilisation par l'application d'une charge sur la pédale (195) et l'application d'une force vers l'arrière sur les poignées gauche et droite (168L, 168R) du guidon (160),
**caractérisé en ce qu'**en position rétractée, seule la pédale (195) de la béquille centrale (190) est disposée à l'extérieur de la portion de plancher (201d) et les portions de contact au sol gauche et droite (192L, 192R) sont disposées à l'intérieur de la portion de plancher (201d) en direction gauche-droite du corps de châssis (110) .

2. Véhicule tricycle selon la revendication 1, dans lequel, quand la béquille centrale (190) est en position rétractée, la pédale (195) est positionnée en avant d'une extrémité avant de la surface d'assise (181) du siège (180) et en arrière du centre de rotation (RF) de la portion de roue avant (131) en direction avant-arrière du corps de châssis (110).

3. Véhicule tricycle selon la revendication 1, dans lequel la béquille centrale (190) comprend une portion de support (193L, 193R) supportée par le corps de châssis (110) pour pouvoir pivoter par rapport au corps de châssis (110), dans lequel
la portion de support (193L, 193R) de la béquille centrale (190) est disposée en avant de l'extrémité avant de la surface d'assise (181) du siège (180) et en arrière du centre de rotation (RF) de la portion de roue avant (131) en direction avant-arrière du corps de châssis (110).

4. Véhicule tricycle selon la revendication 3, dans lequel la portion de support (193L, 193R) de la béquille centrale (190) est disposée en avant d'une extrémité arrière de la poignée gauche (168L) et d'une extrémité arrière de la poignée droite (168R) du guidon (160) en direction avant-arrière du corps de châssis (110) dans une vue en plan, le véhicule étant en position verticale.

5. Véhicule tricycle selon la revendication 3, dans lequel
le groupe moteur (170) comprend un carter (172) qui loge un vilebrequin, et
la portion de support (193L, 193R) de la béquille centrale (190) est disposée en avant du carter (172) en direction avant-arrière du corps de châssis (110).

6. Véhicule tricycle selon la revendication 1, dans lequel la pédale (195) est intégrée avec la béquille centrale (190).

7. Véhicule tricycle selon la revendication 1, dans lequel la béquille centrale (190) comprend en outre un mécanisme de retenue (310) qui empêche que la béquille centrale (190) ne pivote en position rétractée depuis la position d'utilisation quand la béquille centrale (190) est en position d'utilisation.

8. Véhicule tricycle selon la revendication 1, dans lequel au moins les portions de contact au sol gauche et droite (192L, 192R) de la béquille centrale (190) et de la roue arrière (134) sont en contact avec le sol quand la béquille centrale (190) est en position d'utilisation.

9. Véhicule tricycle selon la revendication 1, dans lequel au moins les portions de contact au sol gauche et droite (192L, 192R) de la béquille centrale (190), la portion de roue avant (131) et la roue arrière (134) sont en contact avec le sol quand la béquille centrale (190) est en position d'utilisation.
